# EUROPÄISCHE PATENTSCHRIFT

(11) **EP 3 087 350 B1**
(45) Veröffentlichungstag und Bekanntmachung des Hinweises auf die Patenterteilung: **10.01.2018**
(21) Anmeldenummer: 14781895.9
(22) Anmeldetag: 09.10.2014
(51) Int. Cl.: G01D 11/24, G01K 1/14

(54) **SENSORANORDNUNG, SENSORANORDNUNGSSYSTEM UND SATZ VON SENSORANORDNUNGSELEMENTEN**
SENSOR ARRANGEMENT, SENSOR ARRANGEMENT SYSTEM AND SET OF SENSOR ARRANGEMENT ELEMENTS
DISPOSITIF DE DÉTECTION, SYSTÈME DE DISPOSITIF DE DÉTECTION ET ENSEMBLE D'ÉLÉMENTS DE DISPOSITIF DE DÉTECTION

(30) Priorität: 23.12.2013 DE 102013021798
(43) Veröffentlichungstag der Anmeldung: 02.11.2016
(73) Patentinhaber: Epcos AG, 81669 München (DE)
(72) Erfinder: BARD, Oliver, 14612 Falkensee (DE); GRUNDMANN, Wolfgang, 16547 Birkenwerder (DE)
(74) Vertreter: Epping - Hermann - Fischer
(86) Internationale Anmeldenummer: PCT/EP2014/071669
(87) Internationale Veröffentlichungsnummer: WO 2015/096910

(56) Entgegenhaltungen:
- DE-A1-102012 006 378
- DE-B3-102009 017 230
- DE-U1- 20 020 805

## Beschreibung

Die Erfindung betrifft eine Sensoranordnung, ein Sensoranordnungssystem und einen Satz von mehreren Sensoranordnungselementen.

Ein Sensor weist einen Messfühler auf, der ausgebildet ist, eine oder mehrere physikalische Größen zu messen. Ein beispielhafter Messfühler ist ein Temperatursensor.

Temperatursensoren können eingesetzt werden, um die Temperatur in einem System, beispielsweise eine Heizungsanlage, eine Wärmepumpe oder ähnliches, zu messen. Wenn die Temperaturen in solch einem System an mehreren Messstellen erfasst werden, sollen die elektrischen Anschlüsse der Sensoren an den betreffenden Messstellen gegen ein Vertauschen gesichert sein, sodass die Zuordnung eines elektrischen Anschlusses zu dem Sensor an der zugeordneten Messstelle sichergestellt und beibehalten wird.

Die Sensoren weisen Steckverbindungsteile auf, mittels derer sie mit den Gegensteckverbindungsteilen elektrischer Anschlüsse von Leitungen oder Anordnungen zur Weiterverarbeitung der Sensorsignale verbunden werden können.

Um ein Vertauschen zu verhindern, sollen die Sensoren nicht untereinander austauschbar ein. Dies kann dadurch erreicht werden, indem die Sensoren in ihrem Steckverbindungsbereich kodiert sind, beispielsweise indem sie farblich gekennzeichnet sind. Auch die Gegensteckverbindungsteile, mit denen sie verbunden werden, sind entsprechend kodiert, sodass ein Vertauschen vermieden wird.

Bei einer mechanischen Kodierung sind die zueinander passenden Steckverbindungsteile von Sensor und elektrischem Anschluss formschlüssig verbindbar, aber ein Aufstecken auf das Steckverbindungsteil eines anderen Anschlusses ist nicht möglich.

Für den Servicefall sind entsprechend viele Sensorvarianten bereitzustellen, wobei natürlich auch deren Fertigung wegen der unterschiedlichen Varianten mit erhöhtem Aufwand verbunden ist.

Die DE 102009017230 B3 zeigt eine Sensoranordnung mit zwei Sensorbauteilen, deren Gehäuse jeweils eine Verbindungsvorrichtung zur Verbindung der beiden Sensorbauteile aufweist. Die verbundenen Sensorbauteile sind nebeneinander angeordneten.

Die D2 DE 20020805 U1 zeigt ein Sensormodul für ein Steckergehäuse, bei dem ein Sensorelement in ein Trägerelement mit Kontaktelementen eingesetzt wird. Das Trägerelement mit dem Sensorelement wird dann mittels eines Buchsengehäuses im Steckergehäuse gehalten.

Es stellt sich die Aufgabe, eine Alternative bereitzustellen, mittels derer das Vertauschen verhindert wird.

Die Aufgabe wird durch eine Sensoranordnung mit den Merkmalen des Patentanspruchs 1 gelöst.

Diese Sensoranordnung umfasst ein Anschlussstück und ein Sensorelement, welche zwei separate Teile sind, die mit einander verbindbar sind oder verbunden sind. Die Sensoranordnung von miteinander verbundenem Sensorelement und Anschlussstück ist im Gegensatz zu den konventionellen Sensoren zumindest zweiteilig. Die Teile können unabhängig voneinander gefertigt werden. Erst unmittelbar vor der Fertigstellung wird das Sensorelement mit dem Anschlussstück verbunden.

Die Sensoranordnung ist vorgesehen mit einem Anschlussstück mit einem ersten Verbindungsteil und einem Sensorelement mit einem zweiten Verbindungsteil, das mit dem ersten Verbindungsteil verbindungbar ist oder mit dem zweiten Verbindungsteil verbunden ist. Die Sensoranordnung weist bei miteinander verbundenem Anschlussstück und Sensorelement einen Steckverbindungsteil auf.

Vor der Auslieferung können das Sensorelement und das Anschlussstück mittels des ersten und zweiten Verbindungsteils miteinander verbunden werden, sodass verschiedene fertig montierte Sensoranordnungen mit verschiedenen Steckverbindungsteilen, beispielsweise für die Temperaturmessungen in einem System, bereitstehen. Durch den Einsatz verschiedener Varianten von Steckverbindungsteilen kann ein Vertauschen verhindert werden. Alternativ kann die Verbindung von Sensorelement und Anschlussstück auch unmittelbar vor der Befestigung der Sensoranordnung an der Messstelle erfolgen.

Ein Vorteil ergibt sich bei der Fertigung, da die gleichen Sensorelemente für eine Vielzahl verschiedener Anschlussstücke gefertigt werden können und lediglich unterschiedliche Anschlussstücke für die gleichen Sensorelemente gefertigt werden müssen, was den Fertigungsprozess vereinfacht.

Die Sensoranordnung kann als bereits miteinander verbundene Anschlussstück und Sensorelement ausgeliefert werden, sodass jede Kombination von Anschlussstück und Sensorelement eine unterschiedliche Buchse hat, bei der ein Vertauschen der Stecker nicht möglich ist.

Neben der Sicherheit gegen Vertauschen der Sensoranschlüsse ist für den Servicefall nun lediglich das Sensorelement als Ersatzteil erforderlich. Das Gehäuse mit der Steckerkodierung bleibt an der Messstelle und ist bereit zur Aufnahme des gleich gestalteten Sensorteils.

Die Verbindung kann mittels Schnappverbindung erfolgen. Die Verbindungsteile können durch Formschluss bei der Verbindung passend zu einander ausgerichtet werden und durch Federkraft kraftschlüssig miteinander verbindbar sein.
Vorteilhafterweise weisen sie eine Rastung auf, sodass die Teile gar nicht oder nur sehr schwer voneinander getrennt werden können. Weitere Mittel können vorgesehen sein, um die Verbindung zusätzlich gegen unbeabsichtigtes Lösen zu sichern.

Das Steckverbindungsteil erlaubt das Trennen und Verbinden der Sensoranordnung mit einem korrespondierenden Gegensteckverbindungsanteil, um die Sensoranordnung zu versorgen und die detektierten Messwerte auszulesen.

Bei elektrischen Steckverbindungen unterscheidet man den männlichen Teil einer Steckverbindung (mit nach außen weisenden Kontaktstiften) vom weiblichen Teil (mit nach innen weisenden Kontaktöffnungen). Der männliche Teil wird als Stecker bezeichnet. Der weibliche Teil wird als Buchse oder Kopplung bezeichnet. Der Steckverbindungsteil Sensoranordnung kann als Stecker oder Buchse ausgebildet sein. Es gibt auch Steckverbindungsteile mit Steckelementen beiderlei Geschlechts.

Der Steckverbindungsteil kann einen rohrförmigen Kragen aufweisen, der einen äußeren Rand des Steckverbindungsteils um die Anschlusskontakte bildet und zur Führung des Gegensteckverbindungsteils dienen kann. Insbesondere kann der Kragen eines Steckverbindungsteils den Kragen des anderen im Falle der Verbindung umschließen; dies ermöglicht neben der Verbindung der Kontakte eine weitere mechanische Verbindung der Steckverbindungsteile.

In einer vorteilhaften Ausgestaltung weist sowohl das Anschlussstück als auch das Sensorelement Bereiche des Steckverbindungsteils auf. Das Steckverbindungsteil wird erst durch das Verbinden von Sensorelement und Anschlussstück geformt. Alternativ kann das Steckverbindungsteil entweder am Sensorelement oder, vorteilhafterweise, am Anschlussstück vorgesehen sein.

In einer Ausgestaltung weist das Sensorelement Anschlusskontakte auf, welche vom Steckverbindungsteil umfasst werden, wenn das Anschlussstück und Sensorelement miteinander verbunden sind. Diese Anschlusskontakte können in einem Ausführungsbeispiel die stift- oder schienenförmigen Kontaktelemente des Steckverbindungsteils formen oder in einem alternativen Ausführungsbeispiel die Kontaktöffnungen einer Buchse formen.

Das Anschlussstück weist eine Ausnehmung auf mit einer Öffnung, in der das Sensorelement positioniert ist, sodass bei miteinander verbundenen Anschlussstück und Sensorelement der Boden des Steckverbindungsteils ein Bereich des Sensorelements ist. Die Wand der Ausnehmung kann einen Kragen des Steckverbindungsteils formen, wenn das Anschlussstück und das Sensorelement miteinander verbunden sind. Bei aus dem Gehäuse des Sensorelements ragenden Anschlusskontakten weist die Sensoranordnung einen Stecker auf, wenn das Anschlussstück und das Sensorelement miteinander verbunden sind. Bei im Gehäuse angeordneten Kontaktöffnungen kann die Sensoranordnung eine Buchse aufweisen, wenn das Anschlussstück und Sensorelement miteinander verbunden sind.

Das Anschlussstück weist vorteilhafterweise ein Kodierungsmittel auf. Hierbei kann es sich entweder um eine Farbmarkierung und/oder um mechanische Kodierungsmittel handeln, mittels derer verhindert werden soll, dass die Sensoranordnung mit dem Anschlussstück an nicht dafür vorgesehene Anschlussstellen platziert wird.

Die Kodierungsmittel können beispielsweise Nuten und Zapfen jenseits der Anschlusskontakte sein, die das Einstecken in andere Gegensteckverbindungsteilen mit passenden Kontakten aber nicht passender Kodierung verhindern.

Mechanische Kodierungsmittel können eine oder mehrere Vertiefungen und/oder Erhöhungen im Bereich des Anschlussstücks sein, das bei miteinander verbundenen Anschlussstück und Sensorelement vom Steckverbindungsteil umfasst ist. Die Vertiefungen und Erhöhungen können beispielsweise grabenförmig, stiftförmig und /oder als Kante oder Absatz geformt sein. Es können Strukturen an der Kragenwand des Steckverbindungsteils und/oder durchgehende Ausnehmungen darin sein, beispielsweise Löcher. Die Strukturen können an der Innen- und/oder Außenseite am Kragen des Steckverbindungsteils vorgesehen sein. Auch die Positionierung am Boden des Steckverbindungsteils ist möglich. Derartige Vertiefungen und Erhöhungen müssen, damit eine Verbindung zwischen dem Steckverbindungsteil und dem damit korrespondierenden Gegensteckverbindungsteil ermöglicht wird, in entsprechende Vertiefungen und Erhebungen am korrespondierenden Gegensteckverbindungsteil eingreifen.

Vorteilhafterweise weist das erste Verbindungsteil eine Aussparung auf, die ein Gegenstück des zweiten Verbindungsteils aufnimmt und mit diesem verrastet, oder das zweite Verbindungsteil weist eine Aussparung auf, die ein Gegenstück des ersten Verbindungsteils aufnimmt und mit diesem verrastet. Eine Aussparung ist ein Bereich im oder am Gehäuse, der zur Aufnahme eines Gegenstücks ausgebildet ist.

Die Rastung ist eine Vorrichtung bei der die beiden Verbindungsteile in ihrer spezifischen Position bei der Verbindung verharren. In einer Ausgestaltung kann das Rastmittel einen Vorsprung oder eine Vertiefung auf einem federnden Bereich des Verbindungsteils aufweisen, der aufgrund der Federkraft in einer Vertiefung des anderen Verbindungsteils fixiert ist. Das Rastmittel ist vorteilhafterweise derart geformt, dass eine Rückwärtsbewegung aus der Rastposition erschwert wird.

In einer Ausgestaltung ist ein Sensoranordnungssystem vorgesehen, das neben einer Sensoranordnung, welches ferner ein drittes Verbindungsteil aufweist, auch ein ein Befestigungselement mit einem vierten Verbindungsteil umfasst, das mit dem dritten Verbindungsteil verbindbar ist oder verbunden ist.

Das Befestigungselement erlaubt, die Anschlussstelle an der gewünschten Messstelle zu positionieren. Ein solches Befestigungselement kann beispielsweise an Rohren einer Heizungsanlage befestigt werden. Das Anschlussstück mit dem Sensorelement wird dann aufgesteckt, sodass eine Verbindung zwischen dem dritten und dem vierten Verbindungsteil entsteht. Vorteilhafterweise weisen das dritte und/oder vierte Verbindungsteil Rastmittel auf. Vorteilhafterweise weist das Befestigungselement eine Aussparung zur Durchführung eines Verbindungselements auf. Hierbei kann es sich beispielsweise um eine Öse handeln, durch die ein Kabelbinder geführt wird, um das Befestigungselement an dem Rohr zu befestigen. Das vierte Verbindungsteil kann beispielsweise eine federnde Klammer aufweisen, die eine Fixierung der Verbindung von Befestigungselement und Anschlussstück ermöglicht, aber aufgrund der Federkraft auch dessen Lösbarkeit erlaubt. Auch nicht lösbare Verbindungen sind denkbar.

Ferner ist ein Satz von Sensoranordnungen vorgesehen. Dieser umfasst ein erstes Anschlussstück mit einem ersten Verbindungsteil und ein zweites Anschlussstück mit einem ersten Verbindungsteil, das sich vom ersten Verbindungsteil des ersten Anschlussstücks unterscheidet. Ferner ist ein Sensorelement mit einem zweiten Verbindungsteil vorgesehen, das mit dem ersten Verbindungsteil verbindungbar ist, sodass die Anordnung von miteinander verbundenem ersten Anschlussstück und Sensorelement ein Steckverbindungsteil aufweist, das sich von einem Steckverbindungsteil unterscheidet, den ein Anordnung von miteinander verbundenem zweiten Anschlussstück und Sensorelement aufweist.

Dieser Satz von verschiedenen Anschlussstücken erlaubt mit den gleichen Sensorelementen verschieden Sensoranordnungen von miteinander verbundenen Sensorelementen und Anschlussstücken bereitzustellen, die auf Grund ihrer unterschiedlichen Steckverbindungsteile, die nur mit entsprechenden passenden Gegenstücken verbindbar sind, gegen Vertauschen zu sichern.

Die Erfindung wird im Folgenden anhand der Zeichnungen veranschaulicht.
Figur 1 zeigt eine Explosionsdarstellung einer Sensoranordnung mit einem Sensorelement und einem Anschlussstück sowie eines Befestigungselements, das an einem Rohrstück befestigt ist.
Figur 2 zeigt ein weiteres Ausführungsbeispiel eines Sensorelements.
Figur 3 zeigt ein weiteres Ausführungsbeispiel eines Anschlussstücks.
Figur 4 zeigt die zusammengebaute Sensoranordnung einschließlich des Befestigungselements aus Figur 1.

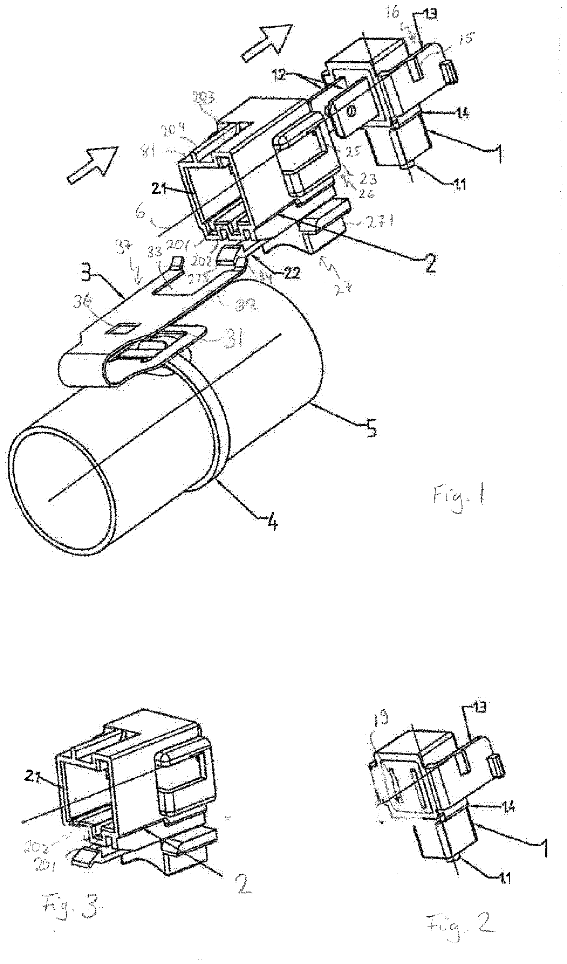

Das in Figur 1 dargestellte Ausführungsbeispiel einer Sensoranordnung umfasst ein Sensorelement 1, ein Anschlussstück 2 sowie ein Befestigungselement 3, das an einem Rohrstück 5 befestigt ist.

Das Sensorelement 1 umfasst ein Gehäuse 14 und einen Messfühler 11, der physikalische oder chemische Eigenschaften oder die stoffliche Beschaffenheit seiner Umgebung qualitativ oder, vorzugsweise, quantitativ erfassen kann. In diesem Ausführungsbeispiel ist der Messfühler 11 ein Temperaturfühler. Der Messfühler 11 kann zumindest teilweise innerhalb oder außerhalb des Gehäuses 14 angeordnet sein. Die detektierten physikalischen oder chemischen Eigenschaften werden in ein elektrisches Signal umgeformt, das ausgangsseitig des Sensorelements 1 anliegt und weiterverarbeitet werden kann.

Ferner umfasst das Sensorelement 1 Anschlusskontakte 12, mittels derer das elektrische Signal bereitgestellt wird. Im gezeigten Ausführungsbeispiel sind die Anschlusskontakte 12 zungenförmige Metallschienen, die aus dem Gehäuse 14 des Sensorelements 1 herausragen. Alternative Ausgestaltungen nach außen weisender Anschlusskontakte sind denkbar, beispielsweise stiftförmige Anschlusskontakte.
Ferner umfasst das Sensorelement 1 schienenförmige federnde Bereiche 13 an zwei gegenüberliegenden Gehäuseseiten mit Rastmitteln 15 auf deren Außenseiten. Die Rastmittel 15 sind beispielhaft dreieckförmige Erhebungen auf den Schienen 13.

Die Kombination von Schienen 13 und Rastmitteln 15 formt ein Verbindungsteil 16 des Sensorelements 1.

Das Anschlussstück 2 umfasst ein Gehäuse 24 mit Vorder- und Rückseite, das eine durchgängige Aussparung 21 zwischen Vorder- und Rückseite aufweist. Im Bereich der Vorderseite weist die Innenseite der Aussparung 21 grabenförmige Vertiefungen 201 und Erhöhungen 202 auf, die parallel zur Längsachse 6 des Anschlussstücks 2 verlaufen. Auf der Außenseiten des Gehäuses sind ebenfalls Vertiefungen 203 und Erhöhungen 204 vorgesehen, die parallel zur Längsachse 6 des Anschlussstücks 2 verlaufen. Die Erhöhungen und Vertiefungen 201, 202, 203, 304 sind Kodierungsmittel.

Das Gehäuse 24 weist ferner nach außen weisende Ausbuchtungen 23 der Seitenwände benachbart zur Rückseite mit Ausnehmungen 25 auf.

Die Kombination von Aussparung 21 und Ausbuchtungen 23 formt ein Verbindungsteil 26 des Anschlussstücks 2. Das Verbindungsteil 26 des Anschlussstücks 2, im Folgenden als erstes Verbindungsteil bezeichnet, ist mit dem Verbindungsteil 16 des Sensorelements 1, im Folgenden als zweites Verbindungsteil bezeichnet, verbindbar.

Das Anschlussstück 2 umfasst ein drittes Verbindungsteil 27, das als Erhöhung 271 an der Gehäuseunterseite ausgebildet ist und eine federnde Zunge 22 umfasst, die sich von der Erhöhung 271 vorderseitig erstreckt und an ihrer Spitze ein Rastmittel 273 aufweist.

Das Sensorelement 1 ist mit dem Anschlussstück 2 mittels der ersten und zweiten Verbindungsteile 16, 26 verbindbar, indem das Sensorelement 1 mit den Anschlusskontakten 12 voran rückseitig in die Ausnehmung 21 des Anschlussstücks 2 geschoben wird bis die Verbindungsteile 16, 26 verrasten. Dabei werden die federnden Schienen 15 entlang der Ausbuchtungen 23 geführt bis das Rastmittel 15 in der Ausnehmung 25 positioniert ist, wodurch die Verbindung fixiert wird.

Die Ausbuchtungen 23 des Anschlussstücks 2 sind derart geformt, dass sie passgenau die als Gegenstück dienenden Schienen 13 des Sensorelements 1 aufnehmen. Beim Verbinden, werden die Schienen 13 entlang der Ausbuchtungen 23 geführt, bis das Rastmittel 15 seine Position in der Ausnehmung 25 in der Ausbuchtung 23 erreicht und Sensorelement 1 und Anschlussstück 2 verrasten.

Das Ausführungsbeispiel veranschaulicht exemplarisch ein erstes und zweites Verbindungsteil 16, 26. Es sei bemerkt, dass weitere Ausgestaltungen denkbar sind, die formschlüssig ineinander positioniert werden und verrasten können. Eines der Verbindungsteile 16, 26 kann Aussparungen aufweisen, in ein Gegenstück des anderen Verbindungsteils 16, 26 beim Verbinden formschlüssig eingreift.

Bei miteinander verbundenem Anschlussstück 2 und Sensorelement 1 weist die Sensoranordnung ein Steckverbindungsteil 8 auf, das ein Teil einer Steckverbindung ist, mittels derer die Sensoranordnung kontaktiert werden kann.
Bei miteinander verbundenem Anschlussstück 2 und Sensorelement 1 formen das Gehäuse 24 des Anschlussstücks 2, die Anschlusskontakte 12 und der Gehäusebereich des Sensorelements 1, aus dem sie herausragen, einen Stecker, der mit einer Buchse bzw. Kopplung (nicht dargestellt) verbindbar ist ist.
Bei miteinander verbundenem Anschlussstück 2 und Sensorelement 1 sind die Anschlusselemente 12 des Sensorelements 2 durch die Vorderseite der Ausnehmung 21 zugängig. Die Wände der Ausnehmung 21 formen einen Kragen 81, und der Gehäusebereich des Sensorelements 1, aus dem die Anschlusskontakte 12 herausragen, formt einen Boden des Steckers 8.
Der Stecker 8 weist Kodierungsmittel 201, 202, 203, 204 auf. In diesem Ausführungsbeispiel ist die Kontur des Steckers 8 durch Vertiefungen und Erhebungen der die Ausnehmung 21 umgebenden Gehäusewand im Anschlussstück 2 derart geformt, dass der Stecker 8 lediglich mit einer entsprechend angepasste Buchse bzw. Kopplung verbindbar ist. Deren Form und die Position und Form ihrer Kontaktöffnungen muss in den Kragen 81 und die Anschlusskontakte 12 eingreifen können, um das Sensorelement 1 zu kontaktieren.
In diesem Ausführungsbeispiel sind grabenförmige Vertiefungen und Erhöhungen 201, 202, 203, 204 entlang der Längsachse 6 als Kodierungsmittel vorgesehen. Alternativ oder zusätzlich können auch stift- oder spiralförmige Vertiefungen vorgesehen sein. In einem anderen Ausführungsbeispiel ist der Stecker 8 derart geformt, dass er Teil eines Bajonettverschlusses ist.

Alternativ oder zusätzlich kann die Kodierung durch farbige Markierungen auf dem Anschlussstück 2 oder ein farbiges Gehäuse 24 erfolgen.

Die zusammengebaute Sensoranordnung wird mittels eines Befestigungselements 3 an der Messstelle, in diesem Ausführungsbeispiel ein Rohrabschnitt 5, befestigt.

Das Befestigungselement 3 ist ein U-förmig gebogenes federndes Element, das beispielsweise aus Plastik oder einem metallenem Blech gefertigt sein kann. Das Befestigungselement 3 wird mit der Messstelle verbunden. Die Verbindung kann beispielsweise durch Kleben oder Schrauben verfolgen. In diesem Ausführungsbeispiel weist das Befestigungselement 3 eine Öse 31 an seiner Unterseite auf, durch die ein weiteres Befestigungselement 4, beispielsweise ein Kabelbinder oder eine Schelle geführt werden kann, um das Befestigungselement 3 an einem Rohr zu befestigen.

Ferner weist das Befestigungselement 3 an seiner Oberseite ein viertes Verbindungsteil 37 auf, das eine federnde Klammer mit Zungen 32 zu beiden Seiten einer Aussparung 33 aufweist. Die Zungen 32 weisen an ihren Spitzen Rastmittel 34 auf. Ferner ist eine Ausnehmung 36 vorgesehen.

Das dritte und vierte Verbindungsteil 27, 37 können, beispielsweise mit Schnappverbindung, verbunden werden, um so die Sensoranordnung an der Messstelle zu fixieren.

Wenn das Anschlussstück 2 auf das Befestigungselement 3 geschoben wird, wird die Erhebung 271 in der Aussparung 33 positioniert und die Zungen 32 verrasten mit der Sensoranordnung. Die Rastmittel 34 können zu diesem Zweck in Ausnehmungen des Gehäuses 24 eingreifen oder hinter eine Kante an der Gehäuseunterseite greifen. Ferner verrastet die Zunge 22 des Anschlussstücks 2 mit der Ausnehmung 36 im Befestigungsmittel 3, sodass eine sichere Fixierung der Sensoranordnung an der Messstelle erreicht wird.

Figur 2 zeigt ein weiteres Ausführungsbeispiel eines Sensorelements 1, dass sich vom in Figur 1 dargestellten dadurch unterscheidet, dass statt der aus dem Gehäuse ragenden Anschlusskontakte 12 Kontaktöffnungen 19 als Anschlusskontakte vorgesehen sind. Durch die Verbindung eines solchen Sensorelements 1 mit einem Anschlussstück 2, wie dem in Figur 1 gezeigten, weist die montierte Sensoranordnung eine Buchse auf, die mittels eines Steckers (nicht dargestellt) mit Anschlussstiften kontaktiert werden kann.

Figur 3 zeigt eine weiteres Ausführungsbeispiel eines Anschlussstücks dass sich vom in Figur 1 dargestellten hinsichtlich seiner Kodierungsmittel unterscheidet. Im Gegensatz zum Anschlussstück aus Figur 1 mit zwei Gräben 201 an der unteren Gehäuseinnenwand, weist dieses Ausführungsbeispiel lediglich einen Graben 201 in der unteren Gehäuseinnenwand auf, sodass ein für das in Figur 1 gezeigte Ausführungsbeispiel passendes Gegensteckverbindungsteil mit zwei Erhebungen nicht in diese Aussparung 21 und den entsprechenden Stecker passen würde.

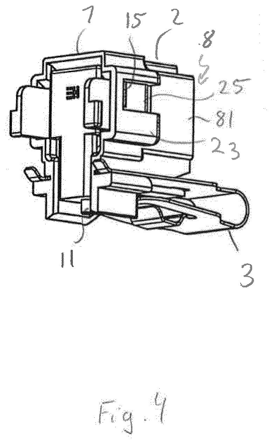

Figur 4 zeigt die zusammengebaute Sensoranordnung am Befestigungsmittel 3 gefestigt von schräg hinten. Die Sensoranordnung ist derart mit dem Befestigungsmittel 3 verbunden, dass das der aus dem Gehäuse 14 herausragende Messfühler 11 in unmittelbarer Nähe zur Messstelle positioniert ist.

Bei einem Satz von Sensoranordnungselementen sind verschiedene Anschlussstücke 2 vorgesehen, die sich hinsichtlich ihrer Kodierungsmittel, d.h. der Anordnung der Erhebungen, Ausnehmungen und Vertiefungen, voneinander unterscheiden. Jedes der Anschlussstücke 2 ist mit einem Sensorelement 1 verbindbar, sodass sich aus gleichen Sensorelementen 1 und verschiedenen Anschlussstücken 2 verschiedene Sensoranordnungen montieren lassen. Da sich die Sensoranordnung hinsichtlich der Kodierungsmittel unterscheiden, unterscheiden sich auch deren Steckverbindungsteile, sodass ein Vertauschen der elektrischen Anschlüsse verhindert wird, da die Steckverbindungsteile nur mit passenden Gegensteckverbindungsteilen verbunden werden können. Der Satz kann auch verschiedene Sensorelemente, beispielsweise wie in den Figuren 1 und 2 dargestellt, aufweisen. Dies vergrößert die Kombinationsmöglichkeiten, da Sensoranordnungen mit Buchse oder Stecker montiert werden können.

Die Merkmale der Ausführungsbeispiele sind kombinierbar.

## Patentansprüche

1. Sensoranordnung mit
einem Anschlussstück (2) mit einem ersten Verbindungsteil (26) und
einem Sensorelement (1) mit einem zweiten Verbindungsteil (16), das mit dem ersten Verbindungsteil (26) verbindbar ist oder mit dem ersten Verbindungsteil (26) verbunden ist,
wobei das Sensorelement (1) ein Gehäuse (14) umfasst,
wobei die Sensoranordnung bei miteinander verbundenem Anschlussstück (2) und Sensorelement (1) einen Steckverbindungsteil (8) zum elektrischen Anschluss des Sensorelements (1) aufweist,
wobei das Anschlussstück (2) ein Gehäuse (24) mit Vorder- und Rückseite umfasst, das eine durchgängige Aussparung (21) zwischen Vorder- und Rückseite aufweist, und
wobei das Sensorelement (1) bei miteinander verbundenem Anschlussstück (2) und Sensorelement (1) in der durchgängigen Aussparung (21) positioniert ist, sodass der Gehäusebereich (14) des Sensorelements (1) einen Boden des Steckverbindungsteils (8) formt.

2. Sensoranordnung nach Anspruch 1,
wobei sowohl das Anschlussstück (2) als auch das Sensorelement (1) Bereiche des Steckverbindungsteils (8) umfasst.

3. Sensoranordnung nach einem der vorhergehenden Ansprüche,
wobei der Steckverbindungsteil (8) als Stecker oder Buchse ausgebildet ist.

4. Sensoranordnung nach einem der vorhergehenden Ansprüche,
wobei das Sensorelement (1) Anschlusskontakte (12) aufweist, welche bei miteinander verbundenem Anschlussstück (2) und Sensorelement (1) vom Steckverbindungsteil (8) umfasst sind.

5. Sensoranordnung nach einem der vorhergehenden Ansprüche,
wobei das Gehäuse (24) des Anschlussstücks (2) eine Seitenwand der Ausnehmung (21) formt und bei miteinander verbundenem Anschlussstück (2) und Sensorelement (1) ein Kragen (81) des Steckverbindungsteils (8) ein Bereich der Seitenwand ist.

6. Sensoranordnung nach einem der vorhergehenden Ansprüche,
wobei das Anschlussstück (2) ein Kodierungsmittel (201, 202, 203, 204) aufweist.

7. Sensoranordnung nach Anspruch 6,
wobei das Kodierungsmittel (201, 202, 203, 204) eine Vertiefung und/oder eine Erhöhung und/oder Ausnehmung im Bereich des Anschlussstücks (2) aufweist, der bei miteinander verbundenen Anschlussstück (2) und Sensorelement (1) vom Steckverbindungsteil (8) umfasst ist.

8. Sensoranordnung nach Anspruch 7,
wobei die Vertiefung und/oder Erhöhung an der Innen- oder Außenseite eines Kragens (81) des Steckverbindungsteils (8) angeordnet ist und/oder die Ausnehmung eine durchgehende Ausnehmung im Kragen (81) ist.

9. Sensoranordnung nach einem der vorhergehenden Ansprüche,
wobei bei miteinander verbundenem Anschlussstück (2) und Sensorelement (1) die ersten und zweiten Verbindungsteile (26, 16) formschlüssig ineinandergreifen und durch Federkraft kraftschlüssig fixiert sind.

10. Sensoranordnung nach einem der vorhergehenden Ansprüche,
wobei das erste Verbindungsteil (26) eine Aussparung (23) aufweist, die ein Gegenstück (13) des zweiten Verbindungsteils (16) aufnimmt und mit diesem verrastet, oder wobei das zweite Verbindungsteil (16) eine Aussparung aufweist, die ein Gegenstück des ersten Verbindungsteils (26) aufnimmt und mit diesem verrastet.

11. Sensoranordnung nach einem der vorhergehenden Ansprüche,
wobei das Sensorelement (1) zur Temperaturmessung ausgebildet ist.

12. Sensoranordnungssystem mit einer Sensoranordnung nach einem der vorhergehenden Ansprüche, das ferner ein drittes Verbindungsteil (27) aufweist, sowie
einem Befestigungselement (3) mit einem vierten Verbindungsteil (37), das mit dem dritten Verbindungsteil (27) verbindbar ist oder verbunden ist.

13. Sensoranordnungssystem nach Anspruch 12,
wobei das dritte und/oder das vierte Verbindungsteil (27, 37) federnde Bereiche (32, 22) und Rastmittel (34, 273) aufweisen.

14. Satz von Sensoranordnungselementen nach einem der Ansprüche 1 bis 11 umfassend
ein erstes Anschlussstück (2) mit einem ersten Verbindungsteil (26),
ein zweites Anschlussstück (2) mit einem ersten Verbindungsteil (26), das sich vom ersten Verbindungsteil (26) des ersten Anschlussstücks (2) unterscheidet, und
ein Sensorelement (1) mit einem zweiten Verbindungsteil (16), das mit dem ersten Verbindungsteil (26) des ersten Anschlussstücks (2) verbindungbar ist, sodass die Sensoranordnung von miteinander verbundenem ersten Anschlussstück (2) und Sensorelement (1) ein Steckverbindungsteil (8) aufweist, das sich von einem Steckverbindungsteil (8) unterscheidet, den eine Sensoranordnung von miteinander verbundenem zweiten Anschlussstück (2) und Sensorelement (1) aufweist.

## Claims

1. Sensor arrangement having
a connector piece (2) having a first connection part (26), and
a sensor element (1) having a second connection part (16), which is connectable to the first connection part (26) or is connected to the first connection part (26),
wherein the sensor element (1) comprises a housing (14),
wherein the sensor arrangement in the case of the connector piece (2) and the sensor element (1) being connected to one another comprises a plug-connection part (8) for electrically connecting the sensor element,
wherein the connector piece (2) comprises a housing (24) having a front side and a rear side, said housing comprising a continuous recess (21) between the front side and the rear side, and wherein in the case of the connector piece (2) and the sensor element (1) being connected to one another the sensor element (1) is positioned in the continuous recess (21) such that the housing region (14) of the sensor element (1) forms a base of the plug-connection part (8).

2. Sensor arrangement according to claim 1, wherein both the connector piece (2) as well as the sensor element (1) comprise regions of the plug-connection part (8).

3. Sensor arrangement according to one of the preceding claims, wherein the plug-connection part (8) is configured as a plug or a socket.

4. Sensor arrangement according to one of the preceding claims, wherein the sensor element (1) comprises connector contacts (12) which in the case of the connector piece (2) and the sensor element (1) being connected to one another are comprised by the plug-connection part (8).

5. Sensor arrangement according to one of the preceding claims, wherein the housing (24) of the connector piece (2) forms a side wall of the clearance (21) and in the case of the connector piece (2) and the sensor element (1) being connected to one another a collar (81) of the plug-connection part (8) is a region of the side wall.

6. Sensor arrangement according to one of the preceding claims, wherein the connector piece (2) comprises a coding means (201, 202, 203, 204).

7. Sensor arrangement according to claim 6, wherein the coding means (201, 202, 203, 204) comprises a depression and/or an elevation and/or a clearance in that region of the connector piece (2) that in the case of the connector piece (2) and the sensor element (1) being connected to one another is comprised by the plug-connection part (8).

8. Sensor arrangement according to claim 7, wherein the depression and/or elevation are/is disposed on the internal or external side of a collar (81) of the plug-connection part (8), and/or the clearance is a continuous clearance in the collar (81).

9. Sensor arrangement according to one of the preceding claims, wherein in the case of the connector piece (2) and the sensor element (1) being connected to one another the first and second connection parts (26, 16) mutually engage in a form-fitting manner and are fixed in a force-fitting manner by a spring force.

10. Sensor arrangement according to one of the preceding claims, wherein the first connection part (26) comprises a recess (23) which receives a counterpiece (13) of the second connection part (16) and latches to the latter, or wherein the second connection part (16) comprises a recess which receives a counterpiece of the first connection part (26) and latches to the latter.

11. Sensor arrangement according to one of the preceding claims, wherein the sensor element (1) is configured for measuring temperature.

12. Sensor arrangement system having a sensor arrangement according to one of the preceding claims, furthermore comprising a third connection part (27), and comprising a fastening element (3) having a fourth connection part (37) which is connectable or is connected to the third connection part (27).

13. Sensor arrangement system wherein according to Claim 12, the third and/or the fourth connection part (27, 37) comprise/comprises resilient regions (32, 22) and latching means (34, 273).

14. Set of sensor arrangement elements according to one of Claims 1 to 11,comprising
a first connector piece (2) having a first connection part (26),
a second connector piece (2) having a first connection part (26) which differs from the first connection part (26) of the first connector piece (2), and a sensor element (1) having a second connection part (16) which is connectable to the first connection part (26) of the first connector piece (2) such that the sensor arrangement of the first connector piece (2) and the sensor element (1) connected to one another comprises a plug-connection part (8) which differs from a plug-connection part (8) which a sensor arrangement of the second connector piece (2) and the sensor element (1) connected to one another comprises.

## Revendications

1. Dispositif de détection avec
une pièce de raccordement (2) avec une première partie de connexion (26) et
un élément de détection (1) avec une deuxième partie de connexion (16), laquelle peut être connectée à la première partie de connexion (26) ou bien est connectée à la première partie de connexion (26),
dans lequel l'élément de détection (1) comprend un boîtier (14),
dans lequel, lorsque la pièce de raccordement (2) et l'élément de détection (1) sont connectés l'un avec l'autre, le dispositif de détection présente une partie de connexion par enfichage (8) pour le raccordement électrique de l'élément de détection (1),
dans lequel la pièce de raccordement (2) comprend un boîtier (24) avec une face avant et arrière, lequel présente un évidement continu (21) entre la face avant et arrière, et
dans lequel, lorsque la pièce de raccordement (2) et l'élément de détection (1) sont connectés l'un avec l'autre, l'élément de détection (1) est positionné dans l'évidement continu (21) de sorte que la zone de boîtier (14) de l'élément de détection (1) forme un fond de la partie de connexion par enfichage (8).

2. Dispositif de détection selon la revendication 1,
dans lequel la pièce de raccordement (2) tout comme également l'élément de détection (1) comprennent des zones de la partie de connexion par enfichage (8).

3. Dispositif de détection selon l'une des revendications précédentes,
dans lequel la partie de connexion par enfichage (8) est réalisée en tant que prise mâle ou prise femelle.

4. Dispositif de détection selon l'une des revendications précédentes,
dans lequel l'élément de détection (1) présente des contacts de raccordement (12) lesquels, en cas de pièce de raccordement (2) et élément de détection (1) connectés l'un avec l'autre, sont enserrés par la partie de connexion par enfichage (8).

5. Dispositif de détection selon l'une des revendications précédentes,
dans lequel le boîtier (24) de la pièce de raccordement (2) forme une paroi latérale de l'évidement (21) et, lorsque la pièce de raccordement (2) et l'élément de détection (1) sont connectés l'un avec l'autre, une collerette (81) de la partie de connexion par enfichage (8) est une zone de la paroi latérale.

6. Dispositif de détection selon l'une des revendications précédentes,
dans lequel la pièce de raccordement (2) présente un moyen de codage (201, 202, 203, 204).

7. Dispositif de détection selon la revendication 6,
dans lequel le moyen de codage (201, 202, 203, 204) présente un creux et/ou une bosse et/ou un évidement dans la zone de la pièce de raccordement (2) laquelle, lorsque la pièce de raccordement (2) et l'élément de détection (1) sont connectés l'un avec l'autre, est enserrée par la partie de connexion par enfichage (8).

8. Dispositif de détection selon la revendication 7,
dans lequel le creux et/ou la bosse sont disposés sur le côté intérieur ou extérieur d'une collerette (81) de la partie de connexion par enfichage (8) et/ou l'évidement est un évidement continu dans la collerette (81).

9. Dispositif de détection selon l'une des revendications précédentes,
dans lequel, lorsque la pièce de raccordement (2) et l'élément de détection (1) sont connectés l'un avec l'autre, les première et deuxième parties de connexion (26, 16) s'engrènent par conjugaison de formes et sont fixées par adhérence grâce à une force élastique.

10. Dispositif de détection selon l'une des revendications précédentes,
dans lequel la première partie de connexion (26) présente un évidement (23) qui réceptionne une contre-pièce (13) de la deuxième partie de connexion (16) et s'encliquète avec celle-ci, ou dans lequel la deuxième partie de connexion (16) présente un évidement qui réceptionne une contre-pièce de la première partie de connexion (26) et s'encliquète avec celle-ci.

11. Dispositif de détection selon l'une des revendications précédentes,
dans lequel l'élément de détection (1) est réalisé pour la mesure de la température.

12. Système de dispositif de détection avec un dispositif de détection selon l'une des revendications précédentes, lequel présente en outre une troisième partie de connexion (27) ainsi qu'un élément de fixation (3) avec une quatrième partie de connexion (37), laquelle peut être connectée, ou est connectée à la troisième partie de connexion (27).

13. Système de dispositif de détection selon la revendication 12,
dans lequel la troisième et/ou la quatrième partie de connexion (27, 37) présentent des zones élastiques (32, 22) et des moyens d'encliquetage (34, 273).

14. Ensemble d'éléments de dispositif de détection selon l'une des revendications 1 à 11, comprenant une première pièce de raccordement (2) avec une première partie de connexion (26),
une deuxième pièce de raccordement (2) avec une première partie de connexion (26), laquelle diffère de la première partie de connexion (26) de la première pièce de raccordement (2), et
un élément de détection (1) avec une deuxième partie de connexion (16), laquelle peut être connectée à la première partie de connexion (26) de la première pièce de raccordement (2) de sorte que le dispositif de détection constitué de la première pièce de raccordement (2) et de l'élément de détection (1) connectés l'un avec l'autre présente une partie de connexion par enfichage (8) qui diffère d'une partie de connexion par enfichage (8) que présente un dispositif de détection constitué de la pièce de raccordement (2) et de l'élément de détection (1) connectés l'un avec l'autre.
